# FASCICULE DE BREVET EUROPEEN

(11) **EP 3 393 764 B1**
(45) Date de publication et mention de la délivrance du brevet: **14.02.2024**
(21) Numéro de dépôt: 16829413.0
(22) Date de dépôt: 21.12.2016
(51) Int. Cl.: B29C 70/02, B29C 70/32, B32B 1/00, B32B 5/00, B29C 53/56, F01D 25/24, B29C 70/24, B29C 70/88, B32B 5/18, B32B 5/26

(54) **CARTER ALLÉGÉ EN MATÉRIAU COMPOSITE ET SON PROCÉDÉ DE FABRICATION**
LEICHTGEWICHTIGES GEHÄUSE AUS VERBUNDSTOFF UND VERFAHREN ZU HERSTELLUNG DAVON
LIGHTER-WEIGHT CASING MADE OF COMPOSITE MATERIAL AND METHOD OF MANUFACTURING SAME

(30) Priorité: 22.12.2015 FR 1563102; 22.12.2015 FR 1563116
(43) Date de publication de la demande: 31.10.2018
(73) Titulaire: Safran Aircraft Engines, 75015 Paris (FR); SAFRAN, 75015 Paris (FR)
(72) Inventeur: FABRE, Hubert, Jean-Marie, 77550 Moissy-Cramayel Cedex (FR); HELLOT, Jérémy, 77500 Moissy-Cramayel Cedex (FR); PHELIPPEAU, Antoine, 77550 Moissy-Cramayel Cedex (FR); MARCHAL, Yann, Didier, Simon, 77550 Moissy-Cramayel Cedex (FR); DAMBRINE, Bruno, Jacques, Gérard, 77550 Moissy-Cramayel Cedex (FR)
(74) Mandataire: Cabinet Beau de Loménie
(86) Numéro de dépôt international: PCT/FR2016/053602
(87) Numéro de publication internationale: WO 2017/109403

(56) Documents cités:
- EP-A2- 1 104 837
- EP-A2- 1 961 923
- US-A1- 2006 093 847
- US-A1- 2009 202 763
- US-A1- 2012 099 981

## Description

### Arrière-plan de l'invention

L'invention concerne les carters de turbine à gaz, et plus particulièrement, mais non exclusivement, les carters de soufflante de turbine à gaz pour moteurs aéronautiques.

Dans un moteur aéronautique à turbine à gaz, le carter de soufflante remplit plusieurs fonctions. Il définit la veine d'entrée d'air dans le moteur, supporte un matériau abradable en regard des sommets d'aubes de la soufflante, supporte une structure éventuelle d'absorption d'ondes sonores pour le traitement acoustique en entrée du moteur et incorpore ou supporte un bouclier de rétention. Le bouclier de rétention constitue un piège à débris retenant les débris, tels que des objets ingérés ou des fragments d'aubes endommagées, projetés par centrifugation, afin d'éviter qu'ils traversent le carter et atteignent d'autres parties de l'aéronef.

Précédemment réalisés en matériau métallique, les carters, comme le carter de soufflante, sont maintenant réalisés en matériau composite, c'est-à-dire à partir d'une préforme fibreuse densifiée par une matrice organique, ce qui permet de réaliser des pièces ayant une masse globale moins élevée que ces mêmes pièces lorsqu'elles sont réalisées en matériau métallique tout en présentant une résistance mécanique au moins équivalente sinon supérieure.

La fabrication d'un carter de soufflante en matériau composite à matrice organique est notamment décrite dans le document US 2013/082417. Dans le carter divulgué dans le document US 2013/082417, le bouclier de rétention est constitué par une portion de surépaisseur obtenue au niveau du renfort fibreux du carter qui présente une épaisseur évolutive. Le renfort fibreux est obtenu par enroulement d'une texture fibreuse tissée 3D dans laquelle une augmentation progressive d'épaisseur est obtenue en changeant la taille des fils ou torons de chaîne. EP 1961923 A2, US 2012/099981 A1, EP 1104837 A2 et US 2009/202763 A1 divulguent un procédé de fabrication d'un carter en matériau composite et un carter de soufflante de turbine à gaz.

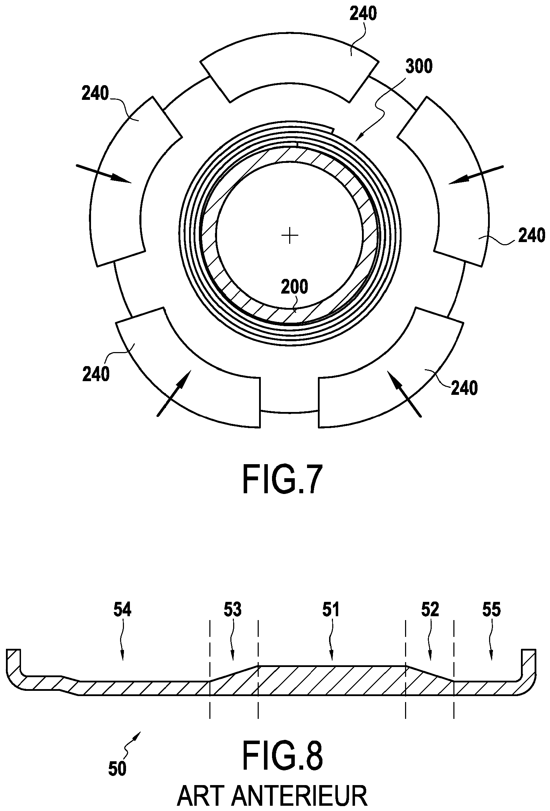

Le figure 8 illustre un carter de soufflante 50 en matériau composite qui comprend une zone ou bouclier de rétention 51 qui constitue la portion de plus grande épaisseur du carter, portion dans laquelle le renfort fibreux comprend des fils ou torons de chaîne de grand diamètre. La zone de rétention 51 est entourée par deux zones de transition adjacentes 52 et 53 qui comprennent à la fois des fils ou torons de chaîne de grand diamètre comme dans la portion 51 et des fils ou torons de chaîne de diamètre plus petit. La proportion de fils ou torons de chaîne augmente progressivement dans les portions 52 et 53 au fur et à mesure qu'elles se rapprochent de la zone de rétention 51. Enfin, le carter 50 comprend des portions 54 et 55 plus éloignées de la zone de rétention 51 qui comprennent seulement des torons ou fils de chaîne de petit diamètre.

Cependant, avec cette technique de fabrication, l'épaississement du renfort fibreux dans la zone de rétention est limité par la tissabilité d'une texture comprenant des torons de trop grand (ou trop petit) diamètre (limite de tissabilité pour les tissés 3D), d'une part, et, d'autre part, par le rapport ou ratio chaîne-trame (RCT) maximum admissible. Concernant ce dernier point, dans le cas par exemple de la fabrication d'un carter, les fils de trame sont continus si bien que, dès que l'on change la taille ou la contexture des fils de chaîne, le RCT est automatiquement modifié.

### Objet et résumé de l'invention

Il est donc souhaitable de pouvoir disposer d'une solution pour disposer d'un carter en matériau composite qui comprend une zone de rétention dont l'amplitude maximale de la surépaisseur n'est pas imposée par une limite de tissabilité et dans laquelle le ratio chaîne-trame peut être contrôlé afin de ne pas dépasser un seuil maximum déterminé.

A cet effet, selon l'invention, il est proposé un procédé de fabrication d'un carter en matériau composite à épaisseur variable pour une turbine à gaz, comprenant:
- la réalisation par tissage tridimensionnel ou multicouche d'une texture fibreuse sous forme d'une bande,
- l'enroulement de la texture fibreuse en plusieurs couches superposées sur un mandrin de profil correspondant à celui du carter à fabriquer, afin d'obtenir une préforme fibreuse de forme correspondant à celle du carter à fabriquer,
- la densification de la préforme fibreuse par une matrice,
caractérisé en ce que, lors de l'enroulement de la texture fibreuse sur le mandrin, une bande textile ou un matériau aéré est interposé entre les tours adjacents de la texture fibreuse, la bande textile ou le matériau aéré présentant une largeur inférieure à la largeur de la texture fibreuse et délimitant une zone de rétention du carter.

En interposant ainsi une couche textile entre les couches adjacentes de la texture fibreuse utilisée pour former le renfort fibreux du carter, il est possible de former dans le carter une portion présentant une surépaisseur désirée apte à constituer une zone ou un bouclier de rétention tout en contrôlant le ratio chaîne-trame dans cette portion de la préforme de manière à ce qu'il ne dépasse pas une valeur prédéterminée. En effet, la bande textile étant indépendante de la texture fibreuse, il suffit d'ajuster le ratio chaîne-trame dans celle-ci pour obtenir le ratio chaîne-trame global visé dans la préforme. Dans le cas de la fabrication d'un carter suivant le procédé de l'art antérieur décrit précédemment, on a une quantité de fils de trame qui est définie sur toute la largeur de la préforme (trame continue) de sorte que l'augmentation de la taille ou du nombre de torons de chaîne a un impact direct sur le ratio chaîne-trame. Avec le procédé de l'invention, on rajoute une bande textile indépendante et donc des fils de chaîne et de trame qui permettent d'épaissir la préforme résultante sans faire varier le ratio chaîne-trame. C'est parce que la bande textile, intercalée dans la texture fibreuse enroulée, est d'une largeur inférieure à ladite texture que l'on peut avoir une « quantité » de fils de trame variable sur la largeur avec un RCT relativement stable malgré l'ajout de fils de chaîne.

Le procédé de l'invention permet en outre d'obtenir une grande variation d'épaisseur au niveau d'une zone de rétention à former dans le carter ce qui minimise la masse globale du carter résultant par rapport à un carter dont la portion de surépaisseur est réalisée par augmentation de la taille des fils ou torons de chaîne.

La zone de rétention ainsi formée assure en outre de manière fiable sa fonction, à savoir retenir des débris, particules ou objets ingérés en entrée du moteur, ou provenant de l'endommagement d'aubes de la soufflante, et projetés radialement par rotation de la soufflante contre le carter.

De même, en interposant un matériau aéré entre les couches adjacentes de la texture fibreuse utilisée pour former le renfort fibreux du carter, il est possible de former une portion de surépaisseur dans le carter apte à constituer une zone ou un bouclier de rétention tout en minimisant la masse globale du carter résultant par rapport à un carter dont la portion de surépaisseur est réalisée uniquement avec une texture fibreuse présentant une épaisseur variable comme dans l'art antérieur.

La zone de rétention ainsi formée assure en outre de manière fiable sa fonction, à savoir retenir des débris, particules ou objets ingérés en entrée du moteur, ou provenant de l'endommagement d'aubes de la soufflante, et projetés radialement par rotation de la soufflante. En effet, en alternant des couches de blindage, formée ici par les couches de la texture fibreuse densifiées par une matrice, avec des couches de matériau aéré, on applique ici un principe balistique selon lequel une pluralité de couches de blindage relativement fines et espacées est aussi performante, voire plus, qu'une seule couche de blindage de forte épaisseur. Ce principe est basé sur le fait que la première couche de blindage atteinte par un projectile divise ce dernier en une multitude de petits projectiles à plus faible énergie qui seront facilement stoppés et retenus par les couches de blindage suivantes. Le matériau aéré peut également participer dans une moindre mesure à l'atténuation de l'énergie des petits projectiles.

Selon une caractéristique particulière du procédé de l'invention, les fibres peuvent être choisies parmi au moins un des types suivants : carbone, verre, aramide et céramique. Selon une autre caractéristique particulière du procédé de l'invention, la bande textile est réalisée avec des fibres du même type que celui des fibres de la texture fibreuse, Cela permet d'avoir une meilleure cohérence de comportement mécanique entre la texture fibreuse et la bande textile tout en simplifiant le choix du précurseur de matrice à injecter dans la préforme.

Selon une autre caractéristique particulière de l'invention, la bande textile est réalisée suivant un tissage tridimensionnel ayant la même armure de tissage que le tissage tridimensionnel de la texture fibreuse. Cela permet d'assurer une transmission efficace et homogène des efforts entre les couches de texture fibreuse et les couches de bande textile interposées sans zones de concentration de contraintes ou de déformations.

Selon une autre caractéristique particulière de l'invention, la bande textile présente un ratio chaîne-trame sensiblement identique à celui de la texture fibreuse. Dans ce cas, la portion de surépaisseur de la préforme fibreuse présente un ratio chaîne-trame similaire à celui présent dans les autres portions de la préforme.

Selon une autre caractéristique particulière du procédé de l'invention, le matériau aéré est réalisé à partir d'une mousse qui est de préférence apte à résister à des températures d'environ 200°C et des pressions de l'ordre de 1 Mpa.

Selon une autre caractéristique particulière du procédé de l'invention, le matériau aéré est réalisé à partir d'une structure alvéolaire qui peut être réalisée notamment en aluminium ou en aramide.

Selon encore une autre caractéristique particulière du procédé de l'invention, après l'étape d'enroulement, la préforme fibreuse comprend n couches de texture fibreuse correspondant à n tours d'enroulement de ladite texture fibreuse et n-1 couches de matériau aéré correspondant à n-1 tours d'enroulement dudit matériau aéré.

L'invention propose également un carter de soufflante de turbine à gaz ayant une épaisseur variable et étant en un matériau composite avec un renfort fibreux comprenant une pluralité de couches superposées d'une texture fibreuse sous forme d'une bande présentant un tissage tridimensionnel ou multicouche, ledit renfort fibreux étant densifié par une matrice,
caractérisé en ce que une bande textile est interposée entre deux couches adjacentes de la texture fibreuse, la bande textile présentant une largeur inférieure à la largeur de la texture fibreuse et délimitant une zone de rétention du carter.

Selon une caractéristique particulière du carter de l'invention, les fibres de la texture fibreuse et les fibres de la bande textile sont choisies parmi au moins un des types suivants : carbone, verre, aramide et céramique.

Selon une autre caractéristique particulière du carter de l'invention, la bande textile est réalisée avec des fibres du même type que celui des fibres de la texture fibreuse.

Selon une autre caractéristique particulière du carter de l'invention, la bande textile présente un tissage tridimensionnel ayant la même armure de tissage que le tissage tridimensionnel de la texture fibreuse.

Selon une autre caractéristique particulière du carter de l'invention, la bande textile présente un ratio chaîne-trame sensiblement identique à celui de la texture fibreuse.

Selon une autre caractéristique particulière du carter de l'invention, le renfort fibreux comprend n couches de texture fibreuse correspondant à n tours d'enroulement de ladite texture fibreuse et n-1 couches de bande textile correspondant à n-1 tours d'enroulement de ladite bande textile.

Selon une caractéristique particulière du carter de l'invention, le matériau aéré est réalisé à partir d'une mousse qui est de préférence apte à résister à des températures d'environ 200°C et des pressions de l'ordre de 1 Mpa.

Selon encore une autre caractéristique particulière du carter selon l'invention, le matériau aéré est réalisé à partir d'une structure alvéolaire qui peut être réalisée notamment en aluminium ou en aramide.

Selon toujours une autre caractéristique particulière du carter selon l'invention, le renfort fibreux comprend n couches de texture fibreuse correspondant à n tours d'enroulement de ladite texture fibreuse et n-1 couches de matériau aéré correspondant à n-1 tours d'enroulement dudit matériau aéré.

L'invention a encore pour objet un moteur aéronautique à turbine à gaz ayant un carter de soufflante selon l'invention.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :
- la figure 1 est une vue en perspective et en coupe partielle d'un moteur aéronautique équipé d'un carter de soufflante en matériau composite conformément à un mode de réalisation de l'invention,
- la figure 2 est une vue en coupe selon le plan II-II du carter de la figure 1,
- la figure 3 est une vue schématique en perspective d'un métier à tisser montrant le tissage d'une texture fibreuse utilisée pour la formation du renfort fibreux du carter des figures 1 et 2,
- la figure 4 est une vue en perspective montrant la mise en forme d'une texture fibreuse et d'une bande textile destinées à former le renfort du carter de soufflante des figures 1 et 2,
- la figure 5 est une vue schématique montrant l'enroulement simultané de la structure fibreuse et de la bande textile de la figure 4,
- la figure 6 est une vue en coupe montrant le profil de la préforme fibreuse obtenue après enroulement de la structure fibreuse et de la bande textile des figures 4 et 5,
- la figure 7 est une vue schématique montrant un outillage permettant de densifier avec une matrice la préforme fibreuse de la figure 6,
- la figure 8 est une vue schématique en coupe d'un carter en matériau composite selon l'art antérieur,
- la figure 9 est une vue en coupe d'un carter de soufflante en matériau composite conformément à un autre mode de réalisation de l'invention,
- la figure 10 est une vue en coupe montrant le profil de la préforme fibreuse obtenue après enroulement de la structure fibreuse et d'un matériau aéré.

### Description détaillée de modes de réalisation

L'invention sera décrite ci-après dans le cadre de son application à un carter de soufflante de moteur aéronautique à turbine à gaz.

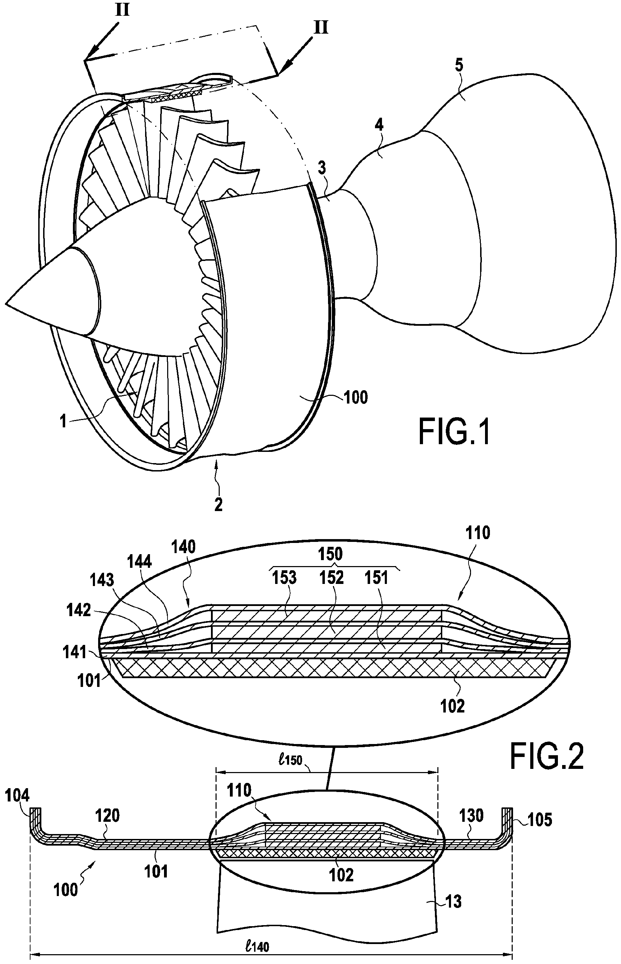

Un tel moteur, comme montré très schématiquement par la figure 1 comprend, de l'amont vers l'aval dans le sens de l'écoulement de flux gazeux, une soufflante 1 disposée en entrée du moteur, un compresseur 2, une chambre de combustion 3, une turbine haute-pression 4 et une turbine basse pression 5.

Le moteur est logé à l'intérieur d'un carter comprenant plusieurs parties correspondant à différents éléments du moteur. Ainsi, la soufflante 1 est entourée par un carter de soufflante 100.

La figure 2 montre un profil de carter de soufflante 100 en matériau composite tel qu'il peut être obtenu par un procédé selon l'invention. La surface interne 101 du carter définit la veine d'entrée d'air. Elle peut être munie d'une couche de revêtement abradable 102 au droit de la trajectoire des sommets d'aubes de la soufflante, une aube 13 étant partiellement montrée de façon très schématique. Le revêtement abradable est donc disposé sur une partie seulement de la longueur (en direction axiale) du carter. Un revêtement de traitement acoustique (non représenté) peut en outre être disposé sur la surface interne 101 notamment en amont du revêtement abradable 102.

Le carter 100 peut être muni de brides externes 104, 105 à ses extrémités amont et aval afin de permettre son montage et sa liaison avec d'autres éléments. Entre ses extrémités amont et aval, le carter 100 présente une épaisseur variable, une portion de surépaisseur 110 du carter ayant une plus forte épaisseur que les parties d'extrémité 120 et 130 se raccordant progressivement à celle-ci.

La portion de surépaisseur 110 s'étend de part et d'autre de l'emplacement de la soufflante, vers l'amont et l'aval, afin de former une zone ou un bouclier de rétention capable de retenir des débris, particules ou objets ingérés en entrée du moteur, ou provenant de l'endommagement d'aubes de la soufflante, et projetés radialement par rotation de la soufflante, pour éviter qu'ils traversent le carter et endommagent d'autres parties de l'aéronef.

Le carter 100 est réalisé en matériau composite à renfort fibreux densifié par une matrice. Le renfort est en fibres par exemple de carbone, verre, aramide ou céramique et la matrice est en polymère, par exemple époxyde, bismaléimide ou polyimide, en carbone ou en céramique.

Le renfort fibreux est formé par enroulement sur un mandrin d'une texture fibreuse réalisée par tissage tridimensionnel avec épaisseur évolutive, le mandrin ayant un profil correspondant à celui du carter à réaliser. Avantageusement, le renfort fibreux constitue une préforme fibreuse tubulaire complète du carter 100 formant une seule pièce avec des parties de renfort correspondant aux brides 104, 105.

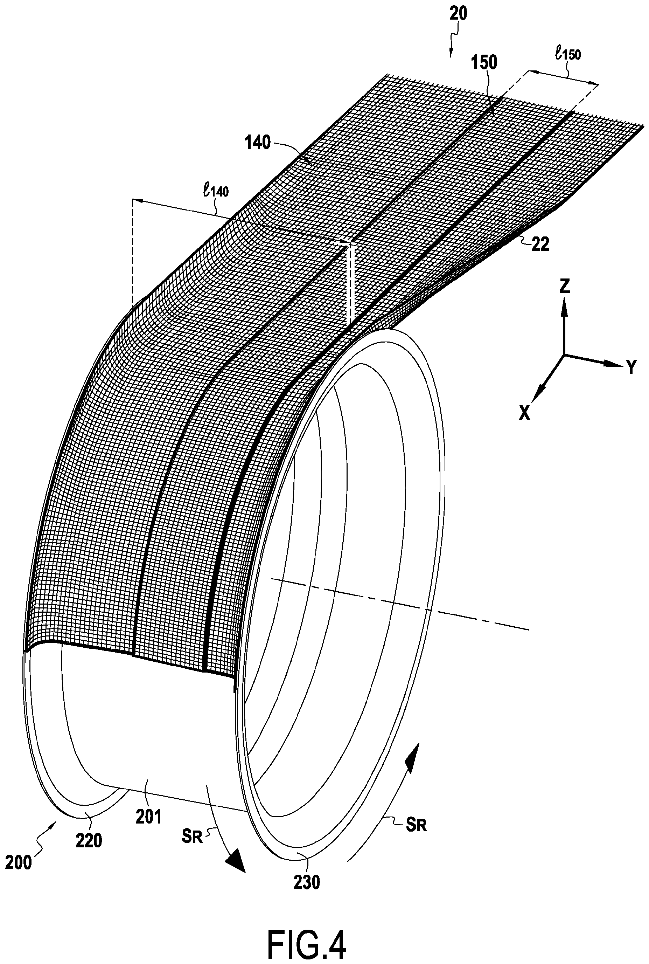

Conformément à l'invention, le renfort fibreux du carter 100 est constitué d'une pluralité de couches superposées 141 à 144 d'une texture fibreuse 140 sous forme d'une bande présentant un tissage tridimensionnel ou multicouche, chaque couche 141 à 144 correspondant à un tour d'enroulement de la texture fibreuse 140 (sur la figure 2 les couches 141 à 144 sont densifiées par une matrice). En outre, une bande textile 150 est interposée entre deux couches adjacentes de la texture fibreuse, la bande textile 150 présentant une largeur I₁₅₀ inférieure à la largeur I₁₄₀ de la texture fibreuse 140 (figure 4) et délimitant la zone de rétention du carter 100. Dans l'exemple décrit ici, trois couches 151 à 153 de bande textile 150 sont interposées entre les couches superposées 141 à 144 de la texture fibreuse 140, chaque couche 151 à 153 correspondant à un tour d'enroulement de la bande textile 150. D'une manière générale, pour n couches de texture fibreuse superposées correspondant chacune à un tour d'enroulement de ladite texture fibreuse, on a n-1 couches de bande textile correspondant chacune à un tour d'enroulement de ladite bande textile.

En interposant ainsi une couche de bande textile entre les couches adjacentes de la texture fibreuse utilisée pour former le renfort fibreux du carter, il est possible de former une portion de surépaisseur dans le carter apte à constituer une zone ou un bouclier de rétention tout en minimisant la masse globale du carter résultant par rapport à un carter dont la portion de surépaisseur est réalisée avec une texture fibreuse seule dans laquelle la taille des fils ou torons est augmentée pour former une portion de surépaisseur. Comme décrit ci-après en détails, le carter selon l'invention peut être fabriqué de manière plus économique qu'un carter dont l'épaisseur variable est réalisée uniquement avec une texture fibreuse dont on fait varier la taille des fils ou torons. En effet, dans ce dernier cas, il est nécessaire d'utiliser des types de fils différents (fils ou torons ayant des titres différents) ce qui augmente le coût d'approvisionnement des fils. En permettant l'utilisation de fils ou torons de même type, le procédé de l'invention réduit ainsi les coûts d'approvisionnement tout en simplifiant les équipements nécessaires pour le tissage et l'enroulement. En outre, le procédé selon l'invention permet de réaliser des géométries de carter plus complexes, notamment en termes de ratio d'épaisseur car la variation d'épaisseur n'entraîne plus de variation significative du ratio chaîne-trame (RCT), la taille des fils de chaîne et de trame peuvant être identique dans toute la texture fibreuse et dans la bande textile.

La conception du carter selon l'invention, permet également d'obtenir, en dehors de la portion de surépaisseur, des portions significativement plus fines que celles obtenues avec les carters en matériau composite de l'art antérieur. En effet, dans les carters de l'art antérieur, les portions adjacentes à la portion de surépaisseur correspondent à des zones de transition dans lesquelles la taille des fils ou torons est progressivement augmentée, ce qui entraîne une augmentation de l'épaisseur de ces portions et de la masse globale du carter résultant.

De préférence mais non exclusivement, la bande textile peut être réalisée avec des fibres du même type que celle utilisées pour réaliser la texture fibreuse, ce qui permet d'avoir une cohérence de comportement mécanique entre la texture fibreuse et la bande textile tout en simplifiant le choix du précurseur de matrice à injecter dans la préforme.

De préférence mais non exclusivement, la bande textile présente la même armure de tissage tridimensionnel que la texture fibreuse, ce qui permet d'assurer une transmission efficace et homogène des efforts entre les couches de texture fibreuse et les couches de bande textile interposées sans zone de concentration de contraintes ou de déformations. Ainsi, les couches de la bande textile suivent les mouvements des couches de la texture fibreuse sans s'y opposer, c'est-à-dire sans engendrer de surcontraintes, ce qui serait plus difficile avec une bande textile ayant une armure de tissage différente de celle de la structure fibreuse.

Encore de préférence mais non exclusivement, la bande textile présente un ratio chaîne-trame (RCT) sensiblement similaire à celui de la texture fibreuse. Le pourcentage de variation du RCT entre la texture fibreuse et la bande textile est de préférence de ±10%, de préférence ±5%, de manière particulièrement préférée ±2%. Le RCT global dans le renfort fibreux du carter est de préférence compris entre 35% et 85%.

On explique maintenant un procédé de fabrication du carter de soufflante 100.

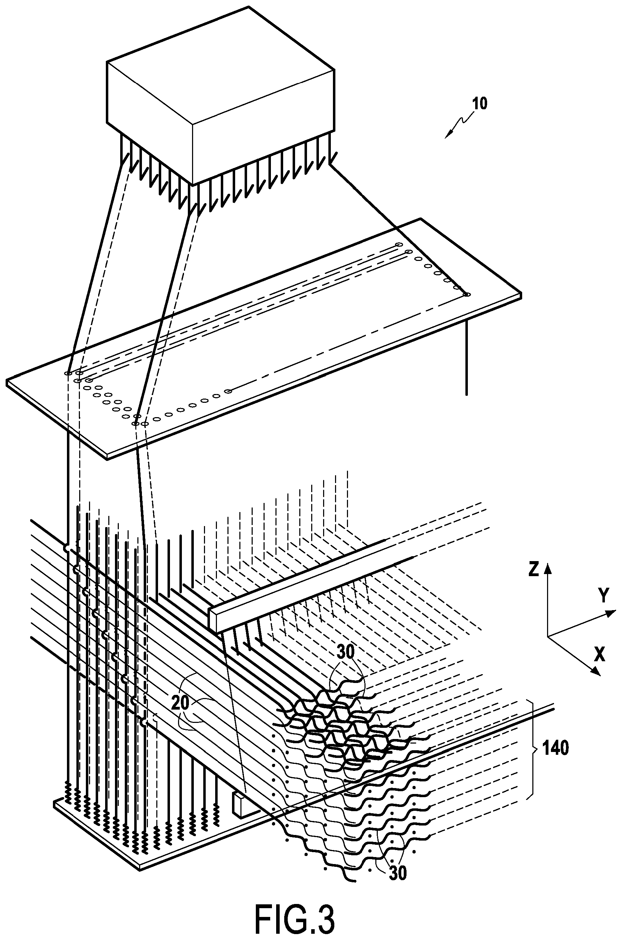

Comme représentée sur la figure 3, une texture fibreuse 140 est réalisée de façon connue par tissage au moyen d'un métier à tisser de type jacquard 10 sur lequel on a disposé un faisceau de fils de chaîne ou torons 20 en une pluralité de couches, les fils de chaîne étant liés par des fils ou torons de trame 30. La texture fibreuse est réalisée par tissage tridimensionnel ou multicouche.

Par « tissage tridimensionnel » ou « tissage 3D », on entend ici un mode de tissage par lequel certains au moins des fils de trame lient des fils de chaîne sur plusieurs couches de fils de chaîne ou inversement. Un exemple de tissage tridimensionnel est le tissage dit à armure « interlock ». Par tissage « interlock », on entend ici une armure de tissage dans laquelle chaque couche de fils de chaîne lie plusieurs couches de fils de trame, avec tous les fils d'une même colonne de chaîne ayant le même mouvement dans le plan de l'armure.

Par "tissage multicouche", on désigne ici un tissage 3D avec plusieurs couches de trame dont l'armure de base de chaque couche est équivalente à une armure de tissu 2D classique, tel qu'une armure de type toile, satin ou sergé, mais avec certains points de l'armure qui lient les couches de trame entre elles.

La réalisation de la texture fibreuse par tissage 3D ou multicouche permet d'obtenir une liaison entre les couches, donc d'avoir une bonne tenue mécanique de la structure fibreuse et de la pièce en matériau composite obtenue, en une seule opération textile.

Des tissages 3D ou multicouches peuvent notamment correspondre à une armure de tissage choisie parmi une des armures suivantes : interlock, multi-toile, multi-satin et multi-sergé.

Par « armure ou tissage multi-toile », on désigne ici un tissage 3D avec plusieurs couches de fils de trame dont l'armure de base de chaque couche est équivalente à une armure de type toile classique mais avec certains points de l'armure qui lient les couches de fils de trame entre elles.

Par « armure ou tissu multi-satin », on désigne ici un tissage 3D avec plusieurs couches de fils de trame dont l'armure de base de chaque couche est équivalente à une armure de type satin classique mais avec certains points de l'armure qui lient les couches de fils de trame entre elles.

Par « armure ou tissu multi-sergé », on désigne ici un tissage 3D avec plusieurs couches de fils de trame dont l'armure de base de chaque couche est équivalente à une armure de type sergé classique mais avec certains points de l'armure qui lient les couches de fils de trame entre elles.

Comme illustrée sur les figures 3 et 4, la texture fibreuse 140 présente une forme de bande qui s'étend en longueur dans une direction X correspondant à la direction de défilement des fils ou torons de chaîne 20 et en largeur ou transversalement dans une direction Y correspondant à la direction des fils ou torons de trame 30.

La structure fibreuse peut être notamment tissée à partir de fils de fibres de type carbone, céramique telle que du carbure de silicium, verre, ou encore aramide.

La bande textile 150 est tissée de manière indépendante à partir d'un métier à tisser de type jacquard comme décrit ci-avant. La bande textile est réalisée par tissage tridimensionnel ou multicouche avec éventuellement des fibres du même type que celles de la texture fibreuse, une même armure de tissage tridimensionnel que celle de la texture fibreuse et avec un ratio chaîne-trame sensiblement identique à celui de la texture fibreuse.

La texture fibreuse et la bande textile sont stockées sur des bobines ou tambours en vue de leur appel lors de leur enroulement conjoint sous tension sur un outillage de mise en forme.

Comme illustré sur la figure 4, une préforme fibreuse est formée par enroulement sur un mandrin 200 de la texture fibreuse 140 réalisée par tissage tridimensionnel, le mandrin ayant un profil correspondant à celui du carter à réaliser. Conformément à l'invention, une bande textile 150 est enroulée avec la texture fibreuse 140, la bande 150 étant positionnée au-dessus de la première couche 141 de la texture 140 enroulée sur le mandrin 200 de manière à intercaler une couche de bande textile 150 de largeur inférieure entre deux couches adjacentes de texture fibreuse de largeur supérieure correspondant à deux tours d'enroulement de la texture fibreuse 140. La bande 150 est positionnée à un emplacement sur la texture fibreuse 140 correspondant à la zone de rétention à former dans le carter.

Avantageusement, la préforme fibreuse constitue un renfort fibreux tubulaire complet du carter 100 formant une seule pièce avec une portion de surépaisseur correspondant à la zone de rétention du carter.

A cet effet, le mandrin 200 présente une surface externe 201 dont le profil correspond à la surface interne du carter à réaliser. Par son enroulement sur le mandrin 200, la texture fibreuse 140 épouse le profil de celui-ci. Le mandrin 200 comporte également deux flasques 220 et 230 pour former des parties de préforme fibreuse correspondant aux brides 104 et 105 du carter 100.

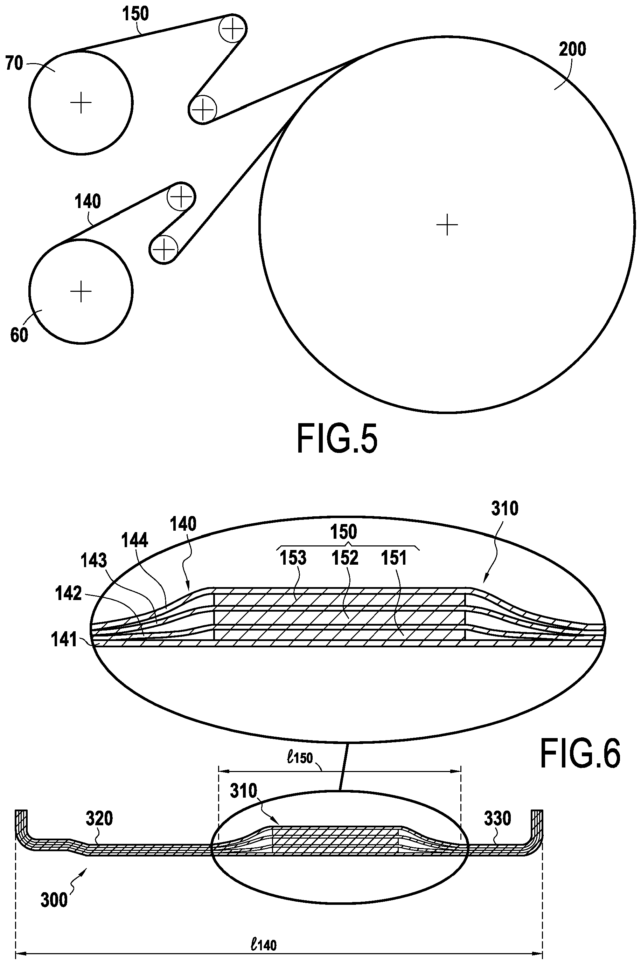

Lors de la formation de la préforme fibreuse par enroulement, la texture fibreuse 140 et la bande textile 150 sont appelées depuis des tambours 60 et 70 respectivement sur lesquels elles sont stockées comme illustrées sur la figure 5.

La figure 6 montre une vue en coupe de la préforme fibreuse 300 obtenue après enroulement de la texture fibreuse 140 et de la bande textile 150 en plusieurs couches sur le mandrin 200. Le nombre de couches ou spires est fonction de l'épaisseur désirée et de l'épaisseur de la texture fibreuse. Il est de préférence au moins égal à 2. Dans l'exemple décrit ici, la préforme 300 comprend 4 couches 141 à 144 de texture fibreuse 140 et 3 couches 151 à 153 de bande textile 150 interposées respectivement entre les couches adjacentes 141 et 142, 142 et 143, et 143 et 144.

On obtient une préforme fibreuse 300 avec une portion de surépaisseur 310 formée par l'interposition des couches 151 à 153 de la bande textile 150 entre les couches superposées 141 à 144 de la texture fibreuse 140. La préforme fibreuse 300 comprend également des parties d'extrémité 320, 330 correspondant aux parties d'extrémité 120, 130 du carter.

On procède ensuite à la densification de la préforme fibreuse 300 par une matrice.

La densification de la préforme fibreuse consiste à combler la porosité de la préforme, dans tout ou partie du volume de celle-ci, par le matériau constitutif de la matrice.

La matrice peut être obtenue de façon connue en soi suivant le procédé par voie liquide.

Le procédé par voie liquide consiste à imprégner la préforme par une composition liquide contenant un précurseur organique du matériau de la matrice. Le précurseur organique se présente habituellement sous forme d'un polymère, tel qu'une résine, éventuellement dilué dans un solvant. La préforme fibreuse est placée dans un moule pouvant être fermé de manière étanche avec un logement ayant la forme de la pièce finale moulée. Comme illustré sur la figure 7, la préforme fibreuse 300 est ici placée entre une pluralité de secteurs 240 formant contre-moule et le mandrin 200 formant support, ces éléments présentant respectivement la forme extérieure et la forme intérieure du carter à réaliser. Ensuite, on injecte le précurseur liquide de matrice, par exemple une résine, dans tout le logement pour imprégner toute la partie fibreuse de la préforme.

La transformation du précurseur en matrice organique, à savoir sa polymérisation, est réalisée par traitement thermique, généralement par chauffage du moule, après élimination du solvant éventuel et réticulation du polymère, la préforme étant toujours maintenue dans le moule ayant une forme correspondant à celle de la pièce à réaliser. La matrice organique peut être notamment obtenue à partir de résines époxydes, telle que, par exemple, une résine époxyde à hautes performances présente dans le commerce, ou de précurseurs liquides de matrices carbone ou céramique.

Dans le cas de la formation d'une matrice carbone ou céramique, le traitement thermique consiste à pyrolyser le précurseur organique pour transformer la matrice organique en une matrice carbone ou céramique selon le précurseur utilisé et les conditions de pyrolyse. A titre d'exemple, des précurseurs liquides de carbone peuvent être des résines à taux de coke relativement élevé, telles que des résines phénoliques, tandis que des précurseurs liquides de céramique, notamment de SiC, peuvent être des résines de type polycarbosilane (PCS) ou polytitanocarbosilane (PTCS) ou polysilazane (PSZ). Plusieurs cycles consécutifs, depuis l'imprégnation jusqu'au traitement thermique, peuvent être réalisés pour parvenir au degré de densification souhaité.

Selon un aspect de l'invention, la densification de la préforme fibreuse peut être réalisée par le procédé bien connu de moulage par transfert dit RTM ("Resin Transfert Moulding"). Conformément au procédé RTM, on place la préforme fibreuse dans un moule présentant la forme du carter à réaliser. Une résine thermodurcissable est injectée dans l'espace interne délimité entre le mandrin 200 et les contres-moules 240 et qui comprend la préforme fibreuse. Un gradient de pression est généralement établi dans cet espace interne entre l'endroit où est injecté la résine et les orifices d'évacuation de cette dernière afin de contrôler et d'optimiser l'imprégnation de la préforme par la résine.

La résine utilisée peut être, par exemple, une résine époxyde. Les résines adaptées pour les procédés RTM sont bien connues. Elles présentent de préférence une faible viscosité pour faciliter leur injection dans les fibres. Le choix de la classe de température et/ou la nature chimique de la résine est déterminé en fonction des sollicitations thermomécaniques auxquelles doit être soumise la pièce. Une fois la résine injectée dans tout le renfort, on procède à sa polymérisation par traitement thermique conformément au procédé RTM.

Après l'injection et la polymérisation, la pièce est démoulée. Au final, la pièce est détourée pour enlever l'excès de résine et les chanfreins sont usinés pour obtenir le carter 100 illustré en figures 1 et 2.

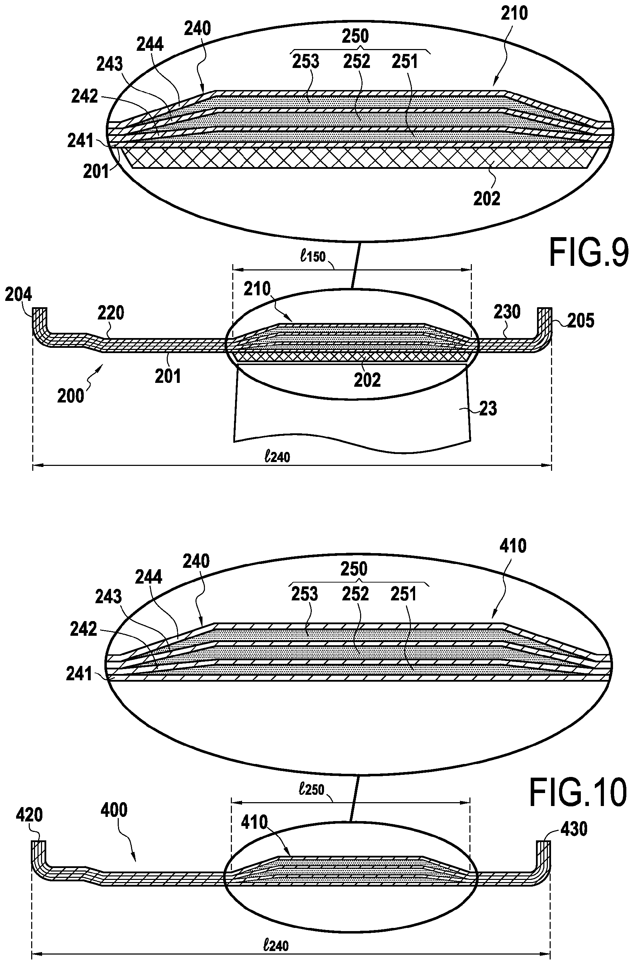

Selon une variante de réalisation de l'invention, lors de l'enroulement de la texture fibreuse sur le mandrin, un matériau aéré est interposé entre les tours adjacents de la texture fibreuse. Cela permet d'obtenir, comme illustré sur la figure 9, un carter 200 dont le renfort est constitué d'une pluralité de couches superposées 241 à 244 d'une texture fibreuse 240 sous forme d'une bande présentant un tissage tridimensionnel ou multicouche, chaque couche 241 à 244 correspondant à un tour d'enroulement de la texture fibreuse 240, un matériau aéré 250, ici sous forme d'une bande, étant interposé entre deux couches adjacentes de la texture fibreuse. La bande de matériau aéré 250 présentant une largeur I₂₅₀ inférieure à la largeur I₂₄₀ de la texture fibreuse 240 et délimitant la zone de rétention du carter 200. Dans l'exemple décrit ici, trois couches 251 à 253 de matériau aéré 250 sont interposées entre les couches superposées 241 à 244 de la texture fibreuse 240, chaque couche 251 à 253 correspondant à un tour d'enroulement de la bande de matériau aéré 250. D'une manière générale, pour n couches de texture fibreuse superposées correspondant chacune à un tour d'enroulement de ladite texture fibreuse, on a n-1 couches de matériau aéré correspondant chacune à un tour d'enroulement de ladite bande textile.

En interposant ainsi une couche de matériau aéré entre les couches adjacentes de la texture fibreuse utilisée pour former le renfort fibreux du carter, il est possible de former une portion de surépaisseur dans le carter apte à constituer une zone ou un bouclier de rétention tout en minimisant la masse globale du carter résultant par rapport à un carter dont la portion de surépaisseur est réalisée uniquement avec une texture fibreuse présentant une épaisseur variable comme dans le document EP 1 961 923.

Le matériau aéré peut se présenter sous différentes formes, comme par exemple une bande continue ou une pluralité de segments ajoutés bout à bout au fur et à mesure de l'enroulement. Il peut également présenter des formes variées. Il peut en particulier présenter, en largeur, un profil à épaisseur variable permettant de définir une portion de surépaisseur ayant une épaisseur variable dans le sens de la largeur du renfort fibreux.

Le matériau aéré peut être notamment réalisé à partir d'une mousse ou d'une structure alvéolaire type nid d'abeille (Nida). Dans l'exemple décrit ici, le matériau aéré 250 est constituée d'une bande de mousse.

Dans le cas d'une mousse, celle-ci présente de préférence un taux de compression relativement faible afin de ne pas trop s'écraser lors de son enroulement avec la texture fibreuse et assurer ainsi la formation de la portion de surépaisseur. La mousse utilisée est de préférence apte à résister, c'est-à-dire à conserver son intégrité et ses propriétés en particulier de compressibilité, à des températures d'environ 200°C et des pressions de l'ordre de 1 Mpa qui correspondent aux conditions de fabrication du carter en matériau composite.

A titre d'exemple non limitatif, une mousse de type Rohacell^{®}, par exemple la mousse Rohacell^{®} XT, peut être utilisée pour former une bande de matériau aéré destinée à être interposée entre les couches adjacentes de texture fibreuse enroulée. Si la mousse est rigide, elle peut être ajoutée par segments au fur et à mesure de l'enroulement de la préforme fibreuse qui elle est souple.

Comme indiqué ci-avant, une structure alvéolaire peut être également utilisée car elle est facilement enroulable et présente une bonne résistance à la compression. La structure alvéolaire peut être notamment un nid d'abeille Nomex^{®} de chez Hexcel^{®}.

Le procédé de fabrication du carter de soufflante 200 correspond au procédé de fabrication du carter 100 déjà décrit ci-avant, la seule différence étant qu'une couche de matériau aéré est interposée entre les tours adjacents de texture fibreuse à la place d'une bande textile.

La figure 10 montre une vue en coupe de la préforme fibreuse 400 obtenue après enroulement de la texture fibreuse 240 et de la bande de matériau aéré 250 en plusieurs couches sur un mandrin. Le nombre de couches ou spires est fonction de l'épaisseur désirée et de l'épaisseur de la texture fibreuse. Il est de préférence au moins égal à 2. Dans l'exemple décrit ici, la préforme 400 comprend 4 couches 241 à 244 de texture fibreuse 240 et 3 couches 251 à 253 de bande de matériau aéré 250 interposées respectivement entre les couches adjacentes 241 et 242, 242 et 243, et 243 et 244.

On obtient une préforme fibreuse 400 avec une portion de surépaisseur 410 formée par l'interposition des couches 251 à 253 de la bande de matériau aéré 250 entre les couches superposées 241 à 244 de la texture fibreuse 240. La préforme fibreuse 400 comprend également des parties d'extrémité 420, 430 correspondant aux brides 204, 205 du carter (figure 9).

On procède ensuite à la densification de la préforme fibreuse 400 par une matrice de la même façon que décrite précédemment pour la préforme 300.

Après l'injection et la polymérisation, la pièce est démoulée. Au final, la pièce est détourée pour enlever l'excès de résine et les chanfreins sont usinés pour obtenir le carter 200 illustré à la figure 9.

## Revendications

1. Procédé de fabrication d'un carter (100) en matériau composite à épaisseur variable pour une turbine à gaz, comprenant:
- la réalisation par tissage tridimensionnel ou multicouche d'une texture fibreuse (140) sous forme d'une bande,
- l'enroulement de la texture fibreuse (140) en plusieurs couches superposées (141, 142, 143, 144) sur un mandrin (200) de profil correspondant à celui du carter à fabriquer, afin d'obtenir une préforme fibreuse (300) de forme correspondant à celle du carter à fabriquer,
- la densification de la préforme fibreuse (300) par une matrice,
où lors de l'enroulement de la texture fibreuse (140) sur le mandrin (200), une bande textile (150) ou un matériau aéré (250) est interposé entre les tours adjacents de la texture fibreuse, la texture fibreuse et la bande textile ou le matériau aéré étant enroulés simultanément, la bande textile (150) ou le matériau aéré (250) présentant une largeur inférieure à la largeur de la texture fibreuse (140) et délimitant une zone de rétention du carter.

2. Procédé selon la revendication 1, **caractérisé en ce que** les fibres de la texture fibreuse (140) et les fibres de la bande textile (150) sont choisies parmi au moins un des types suivants : carbone, verre, aramide et céramique.

3. Procédé selon la revendication 1 ou 2, **caractérisé en ce que** la bande textile (150) est réalisée avec des fibres du même type que celui des fibres de la texture fibreuse.

4. Procédé selon la revendication 1, **caractérisé en ce que** la bande textile (150) est réalisée suivant un tissage tridimensionnel ayant la même armure de tissage que le tissage tridimensionnel de la texture fibreuse (140).

5. Procédé selon l'une quelconque des revendications 1 à 4, **caractérisé en ce que** la bande textile (150) présente un ratio chaîne-trame sensiblement identique à celui de la texture fibreuse (140).

6. Procédé selon la revendication 1, **caractérisé en ce que** le matériau aéré (250) est réalisé à partir d'une mousse ou d'une structure alvéolaire.

7. Carter de soufflante (100) de turbine à gaz ayant une épaisseur variable et étant en un matériau composite avec un renfort fibreux comprenant une pluralité de couches superposées (141, 142, 143, 144) d'une texture fibreuse (140) sous forme d'une bande présentant un tissage tridimensionnel ou multicouche, ledit renfort fibreux étant densifié par une matrice, une bande textile (150) ou un matériau aéré (250) étant interposé entre deux couches adjacentes de la texture fibreuse, la bande textile (150) ou le matériau aéré (250) présentant une largeur inférieure à la largeur de la texture fibreuse (140) et délimitant une zone de rétention du carter, **caractérisé en ce que** le renfort fibreux comprend n couches de texture fibreuse (140) correspondant à n tours d'enroulement de ladite texture fibreuse et n-1 couches de bande textile (150) ou de matériau aéré (250) correspondant à n-1 tours d'enroulement de ladite bande textile.

8. Carter selon la revendication 7, **caractérisé en ce que** les fibres de la texture fibreuse (140) et les fibres de la bande textile (150) sont choisies parmi au moins un des types suivants : carbone, verre, aramide et céramique.

9. Carter selon la revendication 7 ou 8, **caractérisé en ce que** la bande textile (150) est réalisée avec des fibres du même type que celui des fibres de la texture fibreuse (140).

10. Carter selon la revendication 7, **caractérisé en ce que** la bande textile (150) présente un tissage tridimensionnel ayant la même armure de tissage que le tissage tridimensionnel de la texture fibreuse (140).

11. Carter selon l'une quelconque des revendications 7 à 10, **caractérisé en ce que** la bande textile (150) présente un ratio chaîne-trame sensiblement identique à celui de la texture fibreuse (140).

12. Carter selon la revendication 7, **caractérisé en ce que** le matériau aéré (150) est réalisé à partir d'une mousse ou d'une structure alvéolaire.

13. Moteur aéronautique à turbine à gaz ayant un carter de soufflante (100) selon l'une quelconque des revendications 7 à 12.

## Patentansprüche

1. Verfahren zur Herstellung eines Gehäuses (100) aus Verbundmaterial mit variabler Dicke für eine Gasturbine, umfassend:
- die Verwirklichung einer Fasertextur (140) in Form eines Streifens durch dreidimensionale oder mehrschichtige Verwebung,
- das Aufwickeln der Fasertextur (140) aus mehreren übereinandergelegten Schichten (141, 142, 143, 144) auf eine Wickelhülse (200) mit einem Profil, das jenem des herzustellenden Gehäuses entspricht, um eine Faservorform (300) mit einer Form zu erhalten, die jener des herzustellenden Gehäuses entspricht,
- die Verdichtung der Faservorform (300) durch eine Matrix,
wobei während des Aufwickelns der Fasertextur (140) auf die Wickelhülse (200) ein Textilstreifen (150) oder ein luftdurchsetztes Material (250) zwischen die benachbarten Wicklungen der Fasertextur eingebracht wird, wobei die Fasertextur und der Textilstreifen oder das luftdurchsetzte Material gleichzeitig aufgewickelt werden, wobei der Textilstreifen (150) oder das luftdurchsetzte Material (250) eine Breite aufweist, die geringer ist als die Breite der Fasertextur (140) und eine Rückhaltezone des Gehäuses begrenzt.

2. Verfahren nach Anspruch 1, **dadurch gekennzeichnet, dass** die Fasern der Fasertextur (140) und die Fasern des Textilstreifens (150) aus zumindest einem der folgenden Typen ausgewählt werden: Kohlenstoff, Glas, Aramid und Keramik.

3. Verfahren nach Anspruch 1 oder 2, **dadurch gekennzeichnet, dass** der Textilstreifen (150) mit Fasern desselben Typs wie die Fasern der Fasertextur verwirklicht wird.

4. Verfahren nach Anspruch 1, **dadurch gekennzeichnet, dass** der Textilstreifen (150) gemäß einer dreidimensionalen Verwebung verwirklicht wird, welche dieselbe Gewebebindung aufweist wie die dreidimensionale Verwebung der Fasertextur (140).

5. Verfahren nach einem der Ansprüche 1 bis 4, **dadurch gekennzeichnet, dass** der Textilstreifen (150) ein Verhältnis von Kett- und Schussfäden aufweist, das im Wesentlichen mit jenem der Fasertextur (140) identisch ist.

6. Verfahren nach Anspruch 1, **dadurch gekennzeichnet, dass** das luftdurchsetzte Material (250) aus einem Schaum oder einer zelligen Struktur verwirklicht ist.

7. Gehäuse (100) für ein Gebläse einer Gasturbine, das eine variable Dicke aufweist und aus einem Verbundmaterial mit einer Faserverstärkung besteht, die mehrere übereinandergelegte Schichten (141, 142, 143, 144) einer Fasertextur (140) in Form eines Streifens umfasst, der eine dreidimensionale oder mehrschichtige Verwebung aufweist, wobei die Faserverstärkung durch eine Matrix verdichtet ist, wobei ein Textilstreifen (150) oder ein luftdurchsetztes Material (250) zwischen zwei benachbarten Schichten der Fasertextur eingebracht ist, wobei der Textilstreifen (150) oder das luftdurchsetzte Material (250) eine Breite aufweist, die geringer ist als die Breite der Fasertextur (140) und eine Rückhaltezone des Gehäuses begrenzt, **dadurch gekennzeichnet, dass** die Faserverstärkung n Schichten der Fasertextur (140) umfasst, die n Wicklungen der Fasertextur entsprechen, und n-1 Schichten des Textilstreifens (150) oder des luftdurchsetzten Materials (250), die n-1 Wicklungen des Textilstreifens entsprechen.

8. Gehäuse nach Anspruch 7, **dadurch gekennzeichnet, dass** die Fasern der Fasertextur (140) und die Fasern des Textilstreifens (150) aus zumindest einem der folgenden Typen ausgewählt sind: Kohlenstoff, Glas, Aramid und Keramik.

9. Gehäuse nach Anspruch 7 oder 8, **dadurch gekennzeichnet, dass** der Textilstreifen (150) mit Fasern desselben Typs wie jenem der Fasern der Fasertextur (140) verwirklicht ist.

10. Gehäuse nach Anspruch 7, **dadurch gekennzeichnet, dass** der Textilstreifen (150) eine dreidimensionale Verwebung aufweist, welche dieselbe Gewebebindung aufweist wie die dreidimensionale Verwebung der Fasertextur (140).

11. Gehäuse nach einem der Ansprüche 7 bis 10, **dadurch gekennzeichnet, dass** der Textilstreifen (150) ein Verhältnis von Kett- und Schussfäden aufweist, das im Wesentlichen mit jenem der Fasertextur (140) identisch ist.

12. Gehäuse nach Anspruch 7, **dadurch gekennzeichnet, dass** das luftdurchsetzte Material (150) aus einem Schaum oder einer zelligen Struktur verwirklicht ist.

13. Gasturbinen-Flugzeugmotor, der ein Gehäuse (100) für ein Gebläse nach einem der Ansprüche 7 bis 12 aufweist.

## Claims

1. A method of fabricating a composite material casing (100) of varying thickness for a gas turbine, the method comprising:
- using three-dimensional or multilayer weaving to make a fiber texture (140) in the form of a strip;
- winding the fiber texture (140) as a plurality of superposed layers (141, 142, 143, 144) onto a mandrel (200) of profile corresponding to the profile of the casing to be fabricated, so as to obtain a fiber preform (300) of shape corresponding to the shape of the casing to be fabricated; and
- densifying the fiber preform (300) with a matrix;
wherein during winding of the fiber texture (140) on the mandrel (200), a textile strip (150) or an aerated material (250) is interposed between the adjacent turns of the fiber texture, the fiber texture and the textile strip or the aerated material being wound simultaneously, the textile strip (150) or the aerated material (250) presenting a width that is less than the width of the fiber texture (140) and defining a retention zone of the casing.

2. A method according to claim 1, **characterized in that** the fibers of the fiber texture (140) and the fibers of the textile strip (150) are selected from at least one of the following types: carbon; glass; aramid; and ceramic.

3. A method according to claim 1 or claim 2, **characterized in that** the textile strip (150) is made with fibers of the same type as the fibers of the fiber texture.

4. A method according to claim 1, **characterized in that** the textile strip (150) is made with three-dimensional weaving having the same weave as the three-dimensional weaving of the fiber texture (140).

5. A method according to any one of claims 1 to 4, **characterized in that** the textile strip (150) presents a warp-weft ratio that is substantially identical to the warp-weft ratio of the fiber texture (140).

6. A method according to claim 1, **characterized in that** the aerated material (250) is made from a foam or from a cellular structure.

7. A gas turbine fan casing (100) having varying thickness and made of a composite material with fiber reinforcement comprising a plurality of superposed layers (141, 142, 143, 144) of a fiber texture (140) in the form of a strip presenting three-dimensional or multilayer weaving, said fiber reinforcement being densified by a matrix, a textile strip (150) or an aerated material (250) is interposed between two adjacent layers of the fiber texture, the textile strip (150) or the aerated material (250) presenting a width that is less than the width of the fiber texture (140) and defining a retention zone of the casing, **characterized in that** the fiber reinforcement comprises n layers of fiber texture (140) corresponding to n winding revolutions of said fiber texture, and n-1 layers of textile strip (150) or aerated material corresponding to n-1 winding revolutions of said textile strip.

8. A casing according to claim 7, **characterized in that** the fibers of the fiber texture (140) and the fibers of the textile strip (150) are selected from at least one of the following types: carbon; glass; aramid; and ceramic.

9. A casing according to claim 7 or claim 8, **characterized in that** the textile strip (150) is made with fibers of the same type as the fibers of the fiber texture (140).

10. A casing according to claim 7, **characterized in that** the textile strip (150) presents three-dimensional weaving having the same weave as the three-dimensional weaving of the fiber texture (140).

11. A casing according to any one of claims 7 to 10, **characterized in that** the textile strip (150) presents a warp-weft ratio that is substantially identical to the warp-weft ratio of the fiber texture (140).

12. A casing according to claim 7, **characterized in that** the aerated material (150) is made from a foam or a cellular structure.

13. A gas turbine aeroengine having a fan casing (100) according to any one of claims 7 to 12.
